# EUROPÄISCHE PATENTSCHRIFT

(11) **EP 0 577 553 B1**
(45) Veröffentlichungstag und Bekanntmachung des Hinweises auf die Patenterteilung: **11.08.1999**
(21) Anmeldenummer: 93810441.1
(22) Anmeldetag: 21.06.1993
(51) Int. Cl.: C07F 7/22, C08K 5/57

(54) **Verfahren zur Herstellung von Diorganozinnmercaptocarboxylaten**
Process for the preparation of diorganotin-mercaptocarboxylates
Procédé de préparation de mercaptocarboxylates de diorganoétains

(30) Priorität: 30.06.1992 CH 204092
(43) Veröffentlichungstag der Anmeldung: 05.01.1994
(73) Patentinhaber: Witco Vinyl Additives GmbH, 68623 Lampertheim (DE)
(72) Erfinder: Fuchs, Reiner, Dr., D-6105 Ober-Ramstadt (DE); Kaufhold, Johannes, D-6145 Lindenfels (DE); Malzacher, Kornelia, D-6145 Lindenfels (DE)

(56) Entgegenhaltungen:
- EP-A- 0 446 174
- CH-A- 449 000
- GB-A- 719 733
- GB-A- 1 430 933
- CHEMICAL ABSTRACTS, vol. 75, 1971, Columbus, Ohio, US; abstract no. 37348u, ONOTSUKA, M. ET AL. 'CHLORINE-CONTAINING RESIN COMPOSITIONS WITH HIGH HEAT-RESISTANCE' Seite 49 ;

## Beschreibung

Die Erfindung betrifft ein Verfahren zur Herstellung von pulverförmigen Diorganozinnmercaptocarboxylaten.

Die Herstellung von Diorganozinnmercaptocarboxylaten aus Mercaptopropionsäure oder deren Ester und Diorganozinnoxiden oder -chloriden in Gegenwart von Lösungsmitteln ist bekannt; siehe z.B. GB-A-1430933, DD-A-289274, JP-A-50-112 323.

DD-A-240747 und DD-A-207723 beschreiben den Zusatz von Katalysatoren und Trockenmitteln zur Beschleunigung der Reaktion von Mercaptocarbonsäureestern mit Diorganozinnoxiden.

Die Verwendung von Hilfsstoffen verursacht Schwierigkeiten bei der Reindarstellung des Endproduktes. Um diese zu vermeiden und gleichzeitig noch eine ausreichende Reaktionsgeschwindigkeit zu erhalten, wurde die Herstellung bei Temperaturen über 100°C aus der Schmelze durchgeführt (JP-A-49-51227). Die hohe Reaktionstemperatur in diesem Verfahren ist jedoch verfahrenstechnisch und ökonomisch ungünstig; darüberhinaus sind die so erhaltenen Produkte schwer zu kristallisieren und behalten eine gewisse Klebrigkeit.

Zur Beschleunigung der Kristallisation wurde wiederum der Zusatz von Katalysatoren, beispielsweise kleiner Mengen unreagierter Mercaptopropionsäure, vorgeschlagen (JP-A-50-112323).

EP-A-446 174 lehrt ein lösungsmittelfreies Herstellungsverfahren für PVC-Stabilisatoren, die Diorganozinnmercaptocarboxylate enthalten, wobei der Reaktionsmischung Adsorbentien zugesetzt werden.

Die Lehre aus CH-A-449 000 betrifft ein Verfahren zur Herstellung von Di-n-octylzinn-β-mercaptopropionat, wobei die β-Mercaptopropionsäure vorzugsweise mit Wasser, mit einem mit Wasser mischbaren Lösungsmittel oder mit einem mit Wasser nichtmischbaren Lösungsmittel vermischt wird.

Nun wurde gefunden, daß sich Diorganozinnoxide mit Mercaptocarbonsäuren überraschenderweise ohne den Einsatz von Lösungsmitteln oder Adsorbentien sehr schnell zu pulverförmigen Diorganozinnmercaptocarboxylaten umsetzen lassen, wenn bei der Reaktion eine maximale Temperatur von 70°C nicht überschritten und das entstehende Produkt unter ständiger Durchmischung abgekühlt wird. Gegenstand der Erfindung ist daher ein Verfahren zur Herstellung eines pulverförmigen Diorganozinnmercaptocarboxylates, dadurch gekennzeichnet, daß man ein Diorganozinnoxid der Formel I, 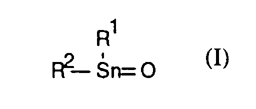 worin R¹ und R² unabhängig voneinander C₁-C₁₈-Alkyl darstellen, bei einer Temperatur im Bereich von 35°C bis 70°C in Abwesenheit von Lösungsmitteln und Adsorbentien mit einer Mercaptocarbonsäure der Formel II 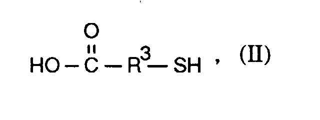 umsetzt, worin R³ Alkylen mit 1 bis 18 C-Atomen oder Phenylen darstellt, und Reaktionsmischung und Produkt während Reaktion und anschließender Abkühlphase ständig durchmischt.

Neben den genannten Dialkylzinnoxiden lassen sich auch solche Verbindungen der Formel I einsetzen, in denen R¹ und/oder R² C₅-C₈-Cycloalkyl, beispielsweise Cyclopentyl, bedeuten.

Vorzugsweise wird während Reaktion und Abkühlphase bis auf 30°C ständig durchmischt.
Das Produkt des erfindungsgemäßen Verfahrens ist ein rieselfähiger Feststoff. Die Korngröße des Produktes kann je nach Zusammensetzung und Verfahrensbedingungen stark variieren, beispielsweise zwischen wenigen Micrometern und einigen Millimetern, sie liegt z.B. im Bereich von 5 µm bis 5 mm, vor allem im Bereich von 50 µm bis 1 mm.

In dem erfindungsgemäßen Verfahren wird das entstehende Reaktionswasser zweckmäßig bei vermindertem Druck, beispielsweise bei 50 bis 300 hPa (= mbar), entfernt.

Die Diorganozinnoxide entsprechen in ihrer Zusammensetzung der Formel I. Neben den Monomeren werden für die Struktur dieser Verbindungen auch Oligomere, Polymere oder dreidimensionale Kristallgitter diskutiert; zur Konstitution dieser Verbindungen s. z.B. Houben-Weyl, Methoden der Organischen Chemie, Bd. 13/6, S. 304, Thieme-Verlag, Stuttgart 1978. Im Folgenden werden Diorganozinnoxide als Verbindungen der Formel I bezeichnet, ohne auf mögliche abweichende Strukturen einzugehen.

Die bei der Reaktion von Diorganozinnoxid und Mercaptocarbonsäure im Molverhältnis 1:1 entstehenden Diorganozinnmercaptocarboxylate können als Monomere entsprechend der Formel III 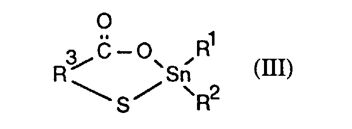 oder als Oligo- oder Polymere vorliegen, die aus wiederkehrenden Einheiten der Formel IV 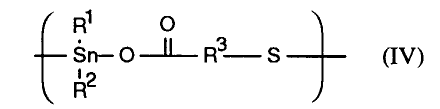 aufgebaut sind (R. Gächter, H. Müller, Plastics Additives Handbook, 3rd Ed., p. 282, Hanser-Verlag, München 1990; Houben-Weyl, Methoden der Organischen Chemie, Bd. 13/6, S. 440-441, Thieme-Verlag, Stuttgart 1978).

Ein Verfahren, bei dem an Stelle eines einheitlichen Eduktes der Formel I und eines einheitlichen Eduktes der Formel II ein Gemisch verschiedener Diorganozinnoxide und/oder Mercaptocarbonsäuren eingesetzt und entsprechend ein Gemisch verschiedener Diorganozinnmercaptocarboxylate erhalten wird, bildet ebenfalls einen Gegenstand der Erfindung.

Das erfindungsgemäße Verfahren kann zu Einzelverbindungen oder auch zu Produktgemischen führen.

Im erfindungsgemäßen Verfahren können die Edukte in äquivalenten Mengen oder auch in nahezu äquivalenten Mengen (Molverhältnis Diorganozinnoxid:Mercaptocarbonsäure 0,9:1 bis 1,1:1) eingesetzt werden. Ebenso möglich ist es, einen größeren Überschuß an Diorganozinnoxid der Formel I einzusetzen. Vorzugsweise werden Diorganozinnoxid und Mercaptocarbonsäure in einem Molverhältnis von 0,9:1 bis 2,1:1 eingesetzt. Besonders bevorzugt ist ein Verfahren, worin das Molverhältnis etwa 1:1 beträgt, d.h. die Organozinnverbindung bezogen auf die Mercaptocarbonsäure in 0,95-facher bis 1,05-facher äquivalenter Menge angewendet wird.

Wird Diorganozinnoxid im Überschuß eingesetzt, so enthält das Produkt auch Einheiten der Formel V 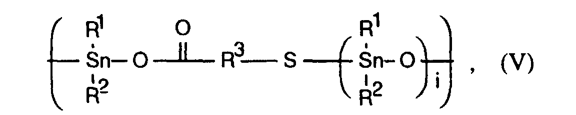 worin i eine Zahl größer als null ist, beispielsweise aus dem Bereich 1 bis 50.

Wird eine geringere als die äquivalente Menge Diorganozinnoxid eingesetzt, so enthält das Produkt Verbindungen, in denen nur die Carboxyl- oder die Mercaptogruppe der Mercaptocarbonsäure mit der Zinnverbindung verestert ist.

R¹ und R² bedeuten als C₁-C₁₈-Alkyl z.B. Methyl, Ethyl, Propyl, Isopropyl, Butyl, Isobutyl, tert-Butyl, Pentyl, Hexyl, Heptyl, Octyl, Nonyl, Decyl, Undecyl, Dodecyl, Tridecyl, Tetradecyl, Pentadecyl, Hexadecyl, Heptadecyl oder Octadecyl, vor allem C₁-C₁₂-Alkyl, z.B. n-Butyl oder n-Octyl.

Bevorzugt sind R¹ und R² gleich.

Besonders bevorzugt als Diorganozinnoxid sind Dibutylzinnoxid, Dioctylzinnoxid und Dilaurylzinnoxid.

Bevorzugte Reaktionspartner von Diorganozinnoxid sind beispielsweise Thioglycolsäure, β-Mercaptopropionsäure und Thiosalicylsäure 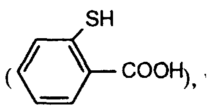 vor allem β-Mercaptopropionsäure.

Vorzugsweise wird im erfindungsgemäßen Verfahren ein Diorganozinnoxid der Formel I eingesetzt, worin R¹ und R² unabhängig voneinander C₄-C₁₂-Alkyl bedeuten. Besonders bevorzugt bedeuten R¹ und R² unabhängig voneinander Butyl oder Octyl.

Die im erfindungsgemäßen Verfahren eingesetzte Mercaptocarbonsäure ist bevorzugt eine der Formel IIa 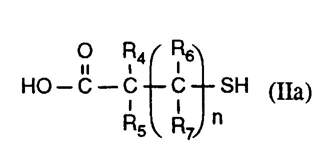 oder der Formel IIb 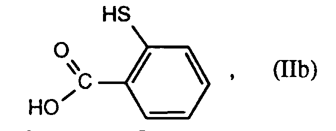 worin n 0 oder 1 ist und R⁴, R⁵, R⁶ und R⁷ unabhängig voneinander -H oder C₁-C₄-Alkyl bedeuten.

Besonders bevorzugt ist ein Verfahren unter Einsatz einer Mercaptocarbonsäure der Formel IIa, worin R⁴, R⁵, R⁶ und R⁷ Wasserstoff bedeuten, oder der Formel IIb.

Von besonders hervorgehobener Bedeutung ist ein Verfahren, dadurch gekennzeichnet, daß man Dibutyl- oder Dioctylzinnoxid mit β-Mercaptopropionsäure umsetzt.

Das erfindungsgemäße Verfahren wird zweckmäßig in Abwesenheit von Katalysatoren durchgeführt, insbesondere in Abwesenheit von Trockenmitteln oder Stoffen, die die Geschwindigkeit der Reaktion und/oder der Kristallisation des Produktes erhöhen, aber keine stabilisierende Funktion in chlorhaltigen Polymerzusammensetzungen haben.

Besonders bevorzugt ist ein Verfahren, worin neben den Edukten der Formel I und der Formel II keine weiteren Verbindungen, Hilfs- oder Zuschlagstoffe eingesetzt werden.

Das Verfahren kann beispielsweise derart ausgeführt werden, daß die Edukte vorvermischt und anschließend in den Reaktor gefüllt werden; oder die Edukte werden nacheinander dem Reaktor zugeführt und anschließend vermischt und erhitzt, beispielsweise kann eine feste Komponente vorgelegt und eine flüssige Komponente durch Versprühen unter Vermengen der entstehenden Reaktionsmischung zugefügt werden. Ebenfalls möglich ist es, das Verfahren kontinuierlich zu betreiben, indem die Edukte in entsprechenden Mengen kontinuierlich dem Reaktionsteil einer geeigneten Apparatur zugeführt werden und das fertige Produkt nach Abkühlen abgezogen wird. Voraussetzung ist, daß eine ständige Durchmischung gewährleistet ist.

Als Apparaturen zur Durchführung des Verfahrens eignen sich prinzipiell alle, die die genannten Voraussetzungen bezüglich Temperierung, Durchmischung und gegebenenfalls Druckreduzierung erfüllen können. Zweckmäßig ist die Verwendung kontinuierlich arbeitender Apparaturen; dabei können sowohl solche mit einheitlichem Verweilzeitverhalten als auch solche Apparaturen verwendet werden, die typischerweise zu einer Streuung der Verweilzeit führen. Beispielsweise können beheizbare Mischer, Trockner oder Extruder als Reaktionsapparate dienen.

Beispiele für Mischer sind Mischer mit zwangsweisem Mischvorgang, V-Mischer, Eirich-Mischer, Pflugschar-Mischer, Pflugschaufel-Mischer, Paddelmischer, Mischschnecken, Umlaufschneckenmischer oder Durchlaufmischer. Besonders bevorzugt sind Mischer, die evakuierbar sind.

Die Reaktion wird bevorzugt in Trocknern, die ebenfalls zweckmäßig evakuierbar sind, durchgeführt. Solche Trockner sind an sich bekannt und es kann sich z.B. um Knettrockner, Schaufeltrockner, Muldentrockner, Schneckentrockner oder Vakuumtellertrockner handeln.

Wie bereits oben beschrieben, werden die einzelnen Komponenten zweckmäßig auf die der zur Anwendung gelangenden Vorrichtung zugehörige Weise in den Reaktionsbehälter, demnach den Mischbehälter oder Trocknerbehälter, eingegeben. Flüssige Komponenten werden zweckmäßig durch geeignete Vorrichtungen auf die feste(n) Komponente(n) aufgesprüht.

Die Komponenten werden nach ausreichender Durchmischung auf die gewünschte Temperatur gebracht; oder, als Alternative, wird zu einer bereits temperierten Komponente oder Mischung eine weitere Komponente unter ausreichendem Durchmischen dazudosiert.

Die Umsetzung der Edukte geschieht im Temperaturbereich 35-70°C, vorzugsweise im Temperaturbereich 45-65°C, vor allem im Temperaturbereich 55-65°C.

Die Reaktionsmischung wird zweckmäßig nicht länger als 2 Stunden, vorzugsweise nicht länger als 60 Minuten etwa auf der maximalen gewählten Temperatur gehalten. Innerhalb dieser Zeit ist die Reaktion beendet. Es werden beispielsweise Reaktionszeiten von 2 bis 120 Minuten, besonders von 5 bis 60 Minuten, vor allem von 5 bis 30 Minuten erreicht.

Das als Nebenprodukt der Reaktion entstehende Wasser wird zweckmäßig während dieser Zeit und/oder zu Beginn der anschließenden Abkühlphase entfernt. Dies kann bei Normaldruck oder bei reduziertem Druck geschehen, wobei das Wasser durch Kondensation innerhalb der Apparatur aufgefangen oder als Dampf abgezogen werden kann. Das Anlegen von Vakuum ist bevorzugt. Dieses liegt beispielsweise im Bereich von 1 bis 500, vorzugsweise 10 bis 500, insbesondere 50 bis 300, vor allem 50 bis 200 mbar.

Nach der Umsetzung wird unter weiterer ständiger Durchmischung abgekühlt, vorzugsweise bis auf 30°C oder darunter.

Die Durchmischung und die Abkühlrate werden vorteilhaft so aufeinander abgestimmt, daß sich zu keiner Zeit Klumpen oder Krusten auf Einbauten oder Wänden der Apparatur bilden; zweckmäßig kommt jedes Volumenteil der Mischung, welches größer ist als die Korngröße des Endproduktes, infolge der Durchmischung ständig mit anderen Volumenteilen in Berührung.

Die nach dem erfindungsgemäßen Verfahren erhaltenen Diorganozinnmercaptocarboxylate können zum Stabilisieren von chlorhaltigen Polymerisaten gegen den schädigenden Einfluß von Licht, Sauerstoff und/oder Wärme eingesetzt werden. Sie eignen sich beispielsweise für folgende Typen von Polymeren:
Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methacrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadien und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.

Ferner sind umfaßt die Pfropfpolymerisate von PVC mit EVA, ABS und MBS. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM, Polylactonen und Nitrilkautschuk.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisate, Emulsionspolymerisate und Massepolymerisate.

Darüberhinaus lassen sich die Verfahrensprodukte für weitere bekannte Verwendungszwecke von Diorganozinnmercaptocarboxylaten einsetzen; zu nennen wäre hier beispielsweise der Einsatz als Arzneistoff für die Tumorbekämpfung gemäß EP-A-472 783.

Das erfindungsgemäße lösungsmittelfreie Verfahren weist beispielsweise die Vorteile auf, daß eine Abtrennung, Entsorgung und Wiederaufbereitung von Lösungsmitteln entfällt, daß es frei von Adsorbentien ist, die sich negativ auf die Gebrauchseigenschaften der stabilisierten chlorhaltigen Polymerzusammensetzungen auswirken können, sowie daß das Produkt als rieselfähiger Feststoff ohne weitere Aufbereitung als Stabilisator eingesetzt werden kann.

Die nachfolgenden Beispiele illustrieren das erfindungsgemäße Verfahren weiter. Alle Angaben in Teilen oder Prozenten beziehen sich auf das Gewicht, soweit nicht anders angegeben.

### Beispiel 1: Herstellung von Dioctylzinn-β-mercaptopropionat

In einem Knettrockner werden 4,27 kg β-Mercaptopropionsäure innerhalb von 6 min durch Verspröhen zu 14,53 kg Dioctylzinnoxid gegeben. Das so erhaltene Gemisch wird für die Dauer von 20 min unter Durchmischen und unter einem Druck von 120 hPa (= 120 mbar) auf 60°C erwärmt, wobei entstehendes Reaktionswasser entweicht. Anschließend erfolgt unter fortdauernder Durchmischung des Produktes die Abkühlung auf Raumtemperatur. Es wird Dioctylzinn-β-mercaptopropionat als weißer rieselfähiger Feststoff erhalten.
Analyse C₁₉H₃₈O₃ S Sn: ber. 6,9 % S, 25,5 % Sn; gef. 6,0 % S, 25,3 % Sn;
IR-Schwingung bei 1531 cm⁻¹; Chemische Verschiebung im ¹¹⁹Sn-NMR bei +94 ppm.

### Beispiel 2: Statischer Hitzetest von stabilisiertem PVC

100,0 Gewichtsteile S-PVC (K-Wert 60), 0,2 Gewichtsteile Montansäureester, 1,0 Gewichtsteile Glycerinmonooleat und 1,6 Gewichtsteile Dioctylzinn-β-mercaptopropionat (Produkt aus Beispiel 1) werden 5 min bei 190°C auf einem Mischwalzwerk plastifiziert. Aus der so erhaltenen Folie (Stärke 0,2 mm) werden Prüfmuster ausgestanzt und in einem Mathis-Thermo-Takter® bei 190°C für die in Tabelle 1 angegebene Zeit thermisch belastet. Anschließend wird der Yellowness Index (YI) gemäß ASTM D 1925-70 bestimmt. Die Ergebnisse sind in Tabelle 1 zusammengestellt. Der Test belegt die stabilisierende Wirkung der Produkte des erfindungsgemäßen Verfahrens.

**Tab. 1:**

| Yellowness Index der Prüfkörper nach Belastung bei 190°C | | | | | | |
|---|---|---|---|---|---|---|
| Dauer (min) | 0 | 10 | 20 | 30 | 40 | 50 |
| YI | 4,8 | 5,5 | 7,0 | 9,0 | 13,1 | 20,2 |

### Beispiel 3: Herstellung von Dibutylzinn-3-mercaptopropionat

Ein Gemisch aus 2,475 kg (23,3 Mol) 3-Mercaptopropionsäure und 5,97 kg (24 Mol) Dibutylzinnoxid wird kontinuierlich einem Schneckentrockner zugeführt, dessen Wärmeaustauschflächen aus zwei Heiz- und einer Kühlzone bestehen. Hinter jeder Heizzone befindet sich eine Absaugeinrichtung zur Entfernung des entstehenden Reaktionswassers.
Das Reaktionsgemisch durchläuft mit einer mittleren Verweilzeit von 7,5 Minuten beide Heizzonen, wobei die Temperatur der ersten 68 °C und die der zweiten Heizzone 63 °C beträgt, und wird anschließend auf 25-30 °C abgekühlt.
Am Austritt des Schneckentrockners wird Dibutylzinn-3-mercaptopropionat als weißes rieselfähiges Pulver erhalten; die IR-spektroskopisch bestimmte Reinheit beträgt 95 %.
Darüberhinaus enthält das Endprodukt 3-Mercaptopropionate mit Sn-O-Sn-Bindungen entsprechend Formel V (IR-Absorption bei 490 cm⁻¹).

## Patentansprüche

1. Verfahren zur Herstellung eines Diorganozinnmercaptocarboxylates, bei dem man ein Diorganozinnoxid der Formel I 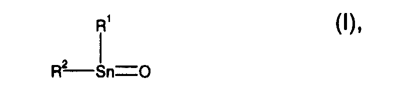 worin R¹ und R² unabhängig voneinander C₁-C₁₈-Alkyl oder C₅-C₈-Cycloalkyl darstellen, in Abwesenheit von Lösungsmitteln und Adsorbentien mit einer Mercaptocarbonsäure der Formel II 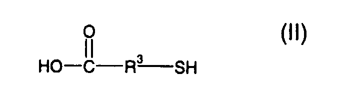 umsetzt, worin R³ Alkylen mit 1 bis 18 C-Atomen oder Phenylen darstellt, dadurch gekennzeichnet, dass die Reaktionstemperatur im Bereich von 35°C bis 70°C liegt und die Reaktionsmischung und das Produkt während der Reaktion und anschliessender Abkühlphase ständig durchmischt werden und ein pulverförmiges Produkt erhalten wird.

2. Verfahren nach Anspruch 1, dadurch gekennzeichnet, daß man ein Diorganozinnoxid der Formel I einsetzt, worin R¹ und R² unabhängig voneinander C₄-C₁₂-Alkyl bedeuten.

3. Verfahren nach Anspruch 1, dadurch gekennzeichnet, daß man ein Diorganozinnoxid der Formel I einsetzt, worin R¹ und R² unabhängig voneinander Butyl oder Octyl bedeuten.

4. Verfahren nach Anspruch 1, dadurch gekennzeichnet, daß man eine Mercaptocarbonsäure der Formel IIa 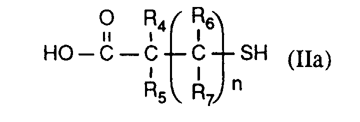 oder der Formel IIb 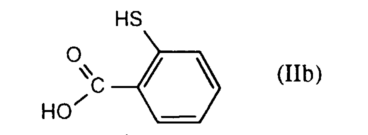 einsetzt, worin n 0 oder 1 ist und R⁴, R⁵, R⁶ und R⁷ unabhängig voneinander -H oder C₁-C₄-Alkyl bedeuten.

5. Verfahren nach Anspruch 4, dadurch gekennzeichnet, daß man eine Mercaptocarbonsäure der Formel IIa, worin R⁴, R⁵, R⁶ und R⁷ Wasserstoff bedeuten, oder der Formel IIb einsetzt.

6. Verfahren nach Anspruch 1, dadurch gekennzeichnet, daß man Dibutyl- oder Dioctylzinnoxid mit β-Mercaptopropionsäure umsetzt.

7. Verfahren nach Anspruch 1, dadurch gekennzeichnet, daß während Reaktion und Abkühlphase bis auf 30°C ständig durchmischt wird.

8. Verfahren nach Anspruch 1, dadurch gekennzeichnet, daß die Umsetzung im Temperaturbereich von 45-65°C durchgeführt wird.

9. Verfahren nach Anspruch 8, dadurch gekennzeichnet, daß die Umsetzung im Temperaturbereich von 55-65°C durchgeführt wird.

10. Verfahren nach Anspruch 7, dadurch gekennzeichnet, daß die Reaktionsdauer 60 Minuten nicht überschreitet.

11. Verfahren nach Anspruch 1, dadurch gekennzeichnet, daß das entstehende Reaktionswasser bei vermindertem Druck im Bereich von 50 bis 300 hPa (= mbar) entfernt wird.

12. Verfahren nach Anspruch 1, dadurch gekennzeichnet, daß die Organozinnverbindung, bezogen auf die Mercaptocarbonsäure, in 0,9-facher bis 2,1-facher äquivalenter Menge eingesetzt wird.

13. Verfahren nach Anspruch 12, dadurch gekennzeichnet, daß die Organozinnverbindung bezogen auf die Mercaptocarbonsäure in 0,95facher bis 1,05-facher äquivalenter Menge angewendet wird.

14. Verfahren nach Anspruch 1, welches in Abwesenheit von Katalysatoren durchgeführt wird.

15. Verfahren nach Anspruch 1, dadurch gekennzeichnet, daß neben den Edukten der Formel I und der Formel II keine weiteren Verbindungen, Hilfs- oder Zuschlagstoffe eingesetzt werden.

## Claims

1. A process for the preparation of a diorganotin mercaptocarboxylate, in which a diorganotin oxide of the formula I 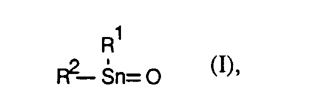 in which R¹ and R², independently of one another, are C₁-C₁₈alkyl or C₅-C₈cycloalkyl, is reacted in the absence of solvents and adsorbents with a mercaptocarboxylic acid of the formula II 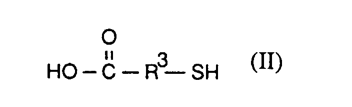 in which R³ is alkylene having 1 to 18 C atoms or is phenylene, wherein the reaction temperature is in the range from 35°C to 70°C and the reaction mixture and the product are subjected during the reaction and the subsequent cooling phase to constant thorough mixing, and a pulverulent product is obtained.

2. A process according to claim 1, wherein a diorganotin oxide of the formula I is used in which R¹ and R², independently of one another, are C₄-C₁₂alkyl.

3. A process according to claim 1, wherein a diorganotin oxide of the formula I is used in which R¹ and R², independently of one another, are butyl or octyl.

4. A process according to claim 1, wherein a mercaptocarboxylic acid of the formula IIa 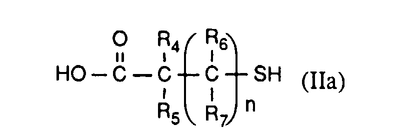 or of the formula IIb 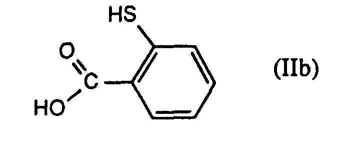 in which n is 0 or 1 and R⁴, R⁵, R⁶ and R⁷, independently of one another, are -H or C₁-C₄alkyl, is used.

5. A process according to claim 4, wherein a mercaptocarboxylic acid of the formula IIa in which R⁴, R⁵, R⁶ and R⁷ are hydrogen or of the formula IIb is used.

6. A process according to claim 1, wherein dibutyltin oxide or dioctyltin oxide is reacted with β-mercaptopropionic acid.

7. A process according to claim 1, wherein the reaction mixture is subjected during the reaction and the cooling phase down to 30°C to constant thorough mixing.

8. A process according to claim 1, wherein the reaction is carried out in a temperature range of 45-65°C.

9. A process according to claim 8, wherein the reaction is carried out in a temperature range of 55-65°C.

10. A process according to claim 7, wherein the reaction time does not exceed 60 minutes.

11. A process according to claim 1, wherein the water of reaction formed is removed at reduced pressure in the range from 50 to 300 hPa (= mbar).

12. A process according to claim 1, wherein the organotin compound is used in 0.9 to 2.1 times the equivalent amount, relative to the mercaptocarboxylic acid.

13. A process according to claim 12, wherein the organotin compound is used in 0.95 to 1.05 times the equivalent amount, relative to the mercaptocarboxylic acid.

14. A process according to claim 1, which is carried out in the absence of catalysts.

15. A process according to claim 1, wherein apart from the starting materials of formula I and formula II, no further compounds, auxiliaries or additives are used.

## Revendications

1. Procédé de préparation d'un mercaptocarboxylate de diorganoétain, dans lequel on fait réagir un oxyde de diorganoétain de formule I 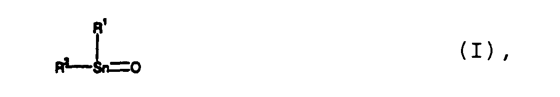 dans laquelle R¹ et R² représentent indépendamment l'un de l'autre un alkyle en C₁-C₁₈ ou un cycloalkyle en C₅-C₈, en l'absence de solvants et d'adsorbants, avec un acide mercaptocarboxylique de formule II 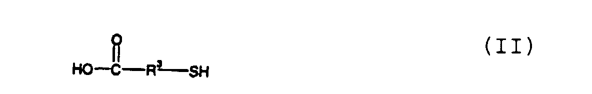 dans laquelle R³ représente un alkylène avec 1 à 18 atomes de carbone ou un phénylène, caractérisé en ce que la température de réaction se situe dans l'intervalle de 35°C à 70°C et en ce que le mélange réactionnel et le produit sont intimement mélangés en permanence au cours de la réaction et de la phase de refroidissement subséquente, et en ce que l'on obtient un produit pulvérulent.

2. Procédé suivant la revendication 1, caractérisé en ce que l'on utilise un oxyde de diorganoétain de formule I dans laquelle R¹ et R² signifient indépendamment l'un de l'autre un alkyle en C₄-C₁₂.

3. Procédé suivant la revendication 1, caractérisé en ce que l'on utilise un oxyde de diorganoétain de formule I dans laquelle R¹ et R² signifient indépendamment l'un de l'autre un butyle ou un octyle.

4. Procédé suivant la revendication 1, caractérisé en ce que l'on utilise un acide mercaptocarboxylique de formule IIa 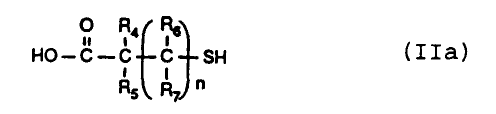 ou de formule IIb 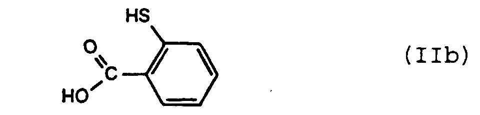 dans lesquelles n est 0 ou 1 et R⁴, R⁵, R⁶ et R⁷ signifient indépendamment l'un de l'autre -H ou un alkyle en C₁-C₄.

5. Procédé suivant la revendication 4, caractérisé en ce que l'on utilise un acide mercaptocarboxylique de formule IIa, dans laquelle R⁴, R⁵, R⁶ et R⁷ signifient un hydrogène, ou de formule IIb.

6. Procédé suivant la revendication 1, caractérisé en ce que l'on fait réagir de l'oxyde de dibutylétain ou de dioctylétain avec de l'acide β-mercaptopropionique.

7. Procédé suivant la revendication 1, caractérisé en ce que l'on mélange intimement en permanence au cours de la réaction et de la phase de refroidissement jusqu'à 30°C.

8. Procédé suivant la revendication 1, caractérisé en ce que la réaction est réalisée dans l'intervalle de températures de 45-65°C.

9. Procédé suivant la revendication 8, caractérisé en ce que la réaction est réalisée dans l'intervalle de températures de 55-65°C.

10. Procédé suivant la revendication 7, caractérisé en ce que le temps de réaction ne dépasse pas 60 minutes.

11. Procédé suivant la revendication 1, caractérisé en ce que l'eau de réaction formée est éliminée sous une pression réduite dans l'intervalle de 50 à 300 hPa (=mbar).

12. Procédé suivant la revendication 1, caractérisé en ce que l'on utilise le composé d'organoétain dans une quantité équivalente à 0,9 fois à 2,1 fois, sur base de l'acide mercaptocarboxylique.

13. Procédé suivant la revendication 12, caractérisé en ce que l'on utilise le composé d'organoétain dans une quantité équivalente à 0,95 fois à 1,05 fois, sur base de l'acide mercaptocarboxylique.

14. Procédé suivant la revendication 1, lequel est réalisé en l'absence de catalyseurs.

15. Procédé suivant la revendication 1, caractérisé en ce que l'on n'utilise pas de composés, substances auxiliaires ou additifs supplémentaires en dehors des éduits de formule I et de formule II.
